(19) Europäisches Patentamt
European Patent Office
Office européen des brevets

(11) **EP 3 237 868 B1**

(12) **EUROPÄISCHE PATENTSCHRIFT**

(45) Veröffentlichungstag und Bekanntmachung des Hinweises auf die Patenterteilung:
**20.01.2021   Patentblatt 2021/03**

(21) Anmeldenummer: **15795192.2**

(22) Anmeldetag: **18.11.2015**

(51) Int Cl.:
*G01L 19/04* *(2006.01)*          *G01L 19/14* *(2006.01)*

(86) Internationale Anmeldenummer:
**PCT/EP2015/076914**

(87) Internationale Veröffentlichungsnummer:
**WO 2016/102120 (30.06.2016 Gazette 2016/26)**

(54) **DRUCKMESSEINRICHTUNG**

PRESSURE SENSOR ASSEMBLY

ASSEMBLAGE DE CAPTEUR DE PRESSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2014   DE 102014119396**

(43) Veröffentlichungstag der Anmeldung:
**01.11.2017   Patentblatt 2017/44**

(73) Patentinhaber: **Endress+Hauser SE+Co. KG**
**79689 Maulburg (DE)**

(72) Erfinder:
 • **SIXTENSSON, Daniel**
   **14469 Potsdam (DE)**

 • **GUTH, Andreas**
   **14532 Stahnsdorf (DE)**
 • **ZIERMANN, Rene**
   **14532 Kleinmachnow (DE)**
 • **MÜLLER, Dennis**
   **14550 Groß Kreutz OT (DE)**

(74) Vertreter: **Andres, Angelika Maria**
**Endress+Hauser Group Services**
**(Deutschland) AG+Co. KG**
**Colmarer Straße 6**
**79576 Weil am Rhein (DE)**

(56) Entgegenhaltungen:
**WO-A1-94/05988      DE-A1-102009 046 692**
**US-A- 5 049 421**

# Beschreibung

Die Erfindung betrifft eine Druckmesseinrichtung mit einem Träger, einem mit dem Träger verbundenen Sockel, und einem auf dem Sockel montierten Drucksensor, dessen Grundfläche größer als eine Grundfläche des Sockels ist.

Druckmesseinrichtungen dienen zur messtechnischen Erfassung von Drücken, insb. von Absolutdrücken, Relativdrücken und Differenzdrücken, und werden in der industriellen Messtechnik verwendet.

In der Druckmesstechnik werden häufig so genannte Halbleiter-Drucksensoren eingesetzt. Halbleiter-Sensoren werden heute regelmäßig auf Siliziumbasis, z.B. unter Verwendung von Silicon-on-Insulator (SOI) Technologie hergestellt. Sie sind z.B. als Drucksensor-Chips ausgebildet, die typischer Weise einen Membranträger und eine auf dem Membranträger angeordnete Messmembran aufweisen.

Diese Drucksensoren sind sehr empfindlich und werden deshalb in ein in der Regel metallisches Gehäuse eingesetzt, und über vorgeschaltete mit einer Druck übertragenden Flüssigkeit gefüllte Druckmittler mit dem zu messenden Druck beaufschlagt. Gehäuse und Drucksensor bestehen somit aus verschiedenen Materialien, die sehr unterschiedliche thermische Ausdehnungskoeffizienten aufweisen. Aufgrund der für die Sensormontage erforderlichen mechanischen Verbindung zwischen Gehäuse und Drucksensor können daher mechanische Spannungen auftreten, die sich auf das Übertragungsverhalten der Messmembran auswirken, und damit die erzielbare Messgenauigkeit und deren Reproduzierbarkeit verschlechtern. Dies gilt insb. für eine temperaturabhängige Hysterese der Messergebnisse.

Zur Reduktion temperaturabhängiger auf den Drucksensor einwirkender Spannungen ist in der DE 10 2007 052 364 A1 beschrieben, den Drucksensor-Chip auf einem keramischen Zwischenträger anzuordnen, der einen an den thermischen Ausdehnungskoeffizienten des Halbleitermaterials des Drucksensors angepassten thermischen Ausdehnungskoeffizienten aufweist. Der Zwischenträger ist über eine mit einem elastischen Kleber ausgeführte Klebung unmittelbar auf einen metallischen Träger des Gehäuse aufgeklebt. Als Material für den Träger ist Kovar angegeben. Kovar weist einen thermischen Ausdehnungskoeffizienten von 6 ppm/K auf, und liegt damit deutlich näher am thermischen Ausdehnungskoeffizienten von für Drucksensoren verwendeten Silizium von 2, 6 ppm/K als gängigere und deutlich kostengünstigere Gehäusematerialien, wie z.B. Edelstahl mit einen thermischen Ausdehnungskoeffizienten von 16 ppm/K.

Bei den beschriebenen Druckmesseinrichtungen weist der keramische Zwischenträger eine Grundfläche auf, die größer als die Grundfläche des darauf angeordneten Drucksensors ist. Letzteres hat zur Folge, dass trotz des vergleichsweise gut angepassten thermischen Ausdehnungskoeffizienten der Zwischenschicht verbleibende thermomechanische Spannungen über die gesamte Grundfläche auf den Drucksensor einwirken.

Als Alternative hierzu sind aus dem Stand der Technik hierzu komplementäre Lösungsansätze bekannt, bei denen eine Reduktion temperaturabhängiger auf den Drucksensor einwirkender Spannungen dadurch erzielt wird, dass der Drucksensor auf einem Sockel angeordnet wird, dessen Grundfläche deutlich kleiner als die Grundfläche des darauf montierten Drucksensors ist. Hierzu sind zwei verschiedene Ausführungsformen bekannt, die z.B. in der DE 34 36 440 A1 beschrieben sind. Bei einer Ausführungsform ist der Sockel integraler Bestandteil des metallischen Trägers des Gehäuse, und besteht aus dem Material des Gehäuses. Bei der zweiten Ausführungsform ist der Sockel als separates Bauteil ausgebildet, das mittels einer Einglasung in eine Bohrung im Träger eingesetzt ist. Die Einglasung bietet den Vorteil, dass sie eine elektrische Isolation des Drucksensors gegenüber dem Gehäuse bewirkt. Allerdings sind die Materialkombinationen von Sockel- und Trägermaterial, zwischen denen hermetisch dichte Einglasungen erzeugt werden können begrenzt. Als weiterer für die Erfindung relevanter Stand der Technik sind außerdem die WO 94/05988 A1, die US 5 049 421 A und die DE 10 2009 046692 A1 zu nennen.

Es ist eine Aufgabe der Erfindung eine Druckmesseinrichtung der eingangsgenannten Art anzugeben, bei der der Drucksensor vor thermomechanischen Spannungen geschützt ist.

Hierzu umfasst die Erfindung eine Druckmesseinrichtung, mit

- einem Träger, insb. einem Träger aus einem Metall, insb. aus einem Edelstahl,
- einem mit dem Träger verbundenen Sockel, und
- einem auf dem Sockel montierten Drucksensor, dessen Grundfläche größer als eine Grundfläche des Sockels ist,
  wobei
- ein vom Drucksensor abgewandtes Ende des Sockel mittels einer Klebung in eine Ausnehmung im Träger eingeklebt ist,
- die Druckmesseinrichtung eine Differenzdruckmesseinrichtung oder eine Absolut- oder Relativdruckmesseinrichtung zur Messung von höheren Drücken ist, bei der der Sockel aus Keramik, insb. aus Aluminiumoxid ($Al_2O_3$), Siliziumnitrid ($Si_3N_4$), Siliziumcarbid (SiC) oder Aluminiumnitrid (AIN), besteht, die einen Elastizitätsmodul von größer gleich 200000 MPa aufweist, und
- in der Ausnehmung eine Zentriervorrichtung, insb. eine durch eine sich in Richtung einer Bodenfläche der Ausnehmung, auf die der Sockel aufgesetzt wird, auf die Grundfläche des Sockels verjüngende Grundfläche der Ausnehmung gebildete Zentriervorrichtung, zur Zentrierung des Sockels vorgesehen ist.

Eine Weiterbildung zeichnet sich dadurch aus, dass der Drucksensor mittels einer Fügung, insb. einer Klebung, insb. einer mit einem Kleber auf Epoxidharzbasis, einem thermoplastischen Kleber oder einem Silikon-Kleber, insb. einem Silikon-Kautschuk, ausgeführten Klebung, auf einem aus der Ausnehmung herausragenden Ende des Sockels, insb. einem herausragenden Ende mit einer Länge in der Größenordnung von wenigen Zehntelmillimetern, montiert ist.

Eine erste Variante zeichnet sich dadurch aus, dass sich die Klebung zwischen Träger und Sockel über eine außenseitliche Mantelfläche des in der Ausnehmung verlaufenden Endes des Sockels erstreckt.

Eine Weiterbildung der ersten Variante zeichnet sich dadurch aus, dass

-   der Sockel eine Gesamtlänge von größer gleich 3 mm aufweist, insb. eine Gesamtlänge von 3 mm bis 7,5 mm, und
-   das in der Ausnehmung verlaufende Ende des Sockels eine Länge von größer gleich 2,5 mm aufweist, wobei
-   das aus der Ausnehmung herausragende den Drucksensor tragende Ende des Sockels insb. eine Länge von wenigen Zehntelmillimetern, insb. in der Größenordnung von 0,5 mm, aufweist.

Eine zweite Variante zeichnet sich dadurch aus, dass sich die Klebung zwischen Träger und Sockel über eine einer Bodenfläche der Ausnehmung zugewandte Stirnfläche des Sockels erstreckt.

Eine dritte Variante zeichnet sich dadurch aus, dass sich die Klebung zwischen Träger und Sockel über eine außenseitliche Mantelfläche des in der Ausnehmung verlaufenden Endes des Sockels und eine einer Bodenfläche der Ausnehmung zugewandte Stirnfläche des Sockels erstreckt.

Eine Weiterbildung der zweiten oder dritten Variante zeichnet sich dadurch aus, dass der Sockel 3 eine Gesamtlänge kleiner gleich 3 mm, insb. eine Gesamtlänge in der Größenordnung von 0,5 mm bis 3 mm aufweist.

Eine weitere Weiterbildung zeichnet sich dadurch aus, dass die Klebung zwischen Sockel und Träger eine mit einem Kleber auf Epoxidharzbasis, einem thermoplastischen Kleber oder einem Silikon-Kleber, insb. einem Silikon-Kautschuk, ausgeführte Klebung ist.

Eine weitere Weiterbildung zeichnet sich dadurch aus, dass die Klebung zwischen Sockel und Träger eine mit einem in Abhängigkeit von einer zur Verbindung von Sockel und Träger zur Verfügung stehenden Klebefläche ausgewählter Kleber ist, wobei ein umso elastischerer Kleber eingesetzt wird, je größer die zur Verfügung stehende Klebefläche ist.

Eine weitere Weiterbildung zeichnet sich dadurch aus, dass der Sockel aus einem Werkstoff besteht, der einen an den thermischen Ausdehnungskoeffizienten des Drucksensors angepassten thermischen Ausdehnungskoeffizienten aufweist.

Eine weiter Weiterbildung zeichnet sich dadurch aus, dass der Sockel eine Länge im Bereich von 0,5 mm bis 7,5 mm aufweist, einen Außendurchmesser im Bereich von 0,5 mm bis 7 mm aufweist, und stabförmig ist oder einen Innendurchmesser im Bereich von 0,25 mm bis 4 mm aufweist.

Gemäß einer bevorzugten Ausgestaltung besteht der Träger aus einem Metall, insb. aus einem Edelstahl.

Die erfindungsgemäße Druckmesseinrichtung weist den Vorteil auf, dass der Drucksensor durch den über eine thermomechanische Spannungen abbauende Klebung in eine Ausnehmung im Träger eingesetzten Sockel vor darauf einwirkenden temperaturabhängigen Spannungen geschützt ist. Dabei weist eine den Sockel außenseitlich umgebende Klebung den Vorteil auf, dass hierüber eine große Klebefläche zur Verfügung steht, so dass auch mit einem sehr elastischen, und damit besonders gut zum Abbau thermomechanischer Spannungen geeigneten Kleber eine mechanisch feste und hermetisch dichte Verbindung erzielt werden kann. In Verbindung mit dem eine geringere Grundfläche als der Drucksensor aufweisenden Sockel wird hierdurch eine deutliche Reduzierung der Temperaturabhängigkeit der Messergebnisse erzielt. Darüber hinaus besteht eine deutlich größere Flexibilität hinsichtlich der Materialwahl der zur Montage des Drucksensors verwendeten Komponenten, so dass auch in Verbindung mit Trägern aus einem kostengünstigem Material, wie z. B. einem Edelstahl, eine verbesserte Messgenauigkeit erzielt wird.

Die Erfindung und deren Vorteile werden nun anhand der Figuren der Zeichnung, in denen drei Ausführungsbeispiele dargestellt sind, näher erläutert. Gleiche Elemente sind in den Figuren mit den gleichen Bezugszeichen versehen.

Fig. 1 zeigt: eine Druckmesseinrichtung mit außenseitlich eingeklebtem Sockel;

Fig. 2 zeigt: eine Druckmesseinrichtung mit stirnseitig eingeklebtem Sockel;

Fig. 3 zeigt: eine Druckmesseinrichtung mit außenseitlich und stirnseitig eingeklebtem Sockel; und

Fig. 4 zeigt: eine Druckmesseinrichtung mit einem einen Edelstahl-Sockel aufweisenden Edelstahl-Träger.

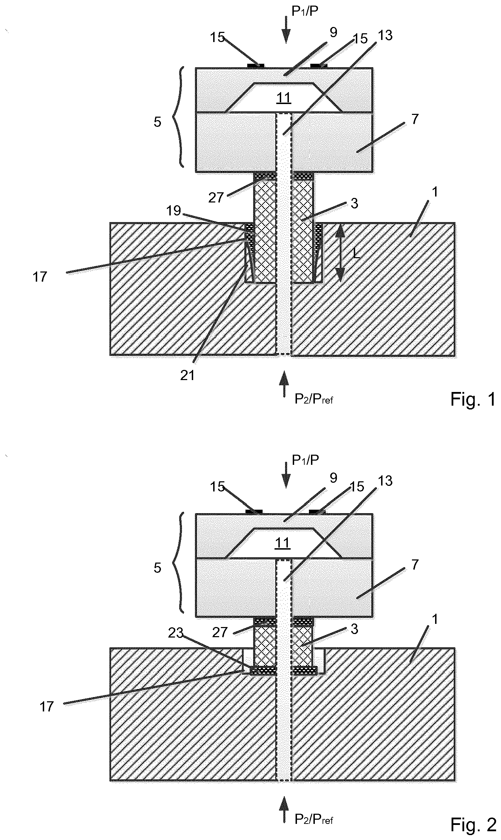

Fig. 1 zeigt eine erfindungsgemäße Druckmesseinrichtung. Sie umfasst einen Träger 1, einen mit dem Träger 1 verbundenen Sockel 3, und einen auf dem Sockel 3 montierten Drucksensor 5. Der Drucksensor 5 ist ein sogenannter Halbleiter-Drucksensor, z.B. ein auf Siliziumbasis hergestellten Drucksensor-Chip, und weist beispielsweise einen Membranträger 7 und eine darauf angeordnete Messmembran 9 auf, unter der eine Druckkammer 11 eingeschlossen ist.

Die Druckmesseinrichtung kann als Differenzdruck-, als Relativdruck- oder als Absolutdruckmesseinrichtung ausgestaltet sein.

Zur Erfassung von Differenzdrücken wird eine erste Seite der Messmembran 9 mit einem ersten Druck $p_1$ beaufschlagt, und deren zweite Seite über eine durch den Träger 1, den Sockel 3 und den Membranträger 7 hindurch verlaufende, in der Druckkammer 11 mündende - in Fig. 1 gestrichelt dargestellte - Druckübertragungsleitung 13 mit einem zweiten Druck $p_2$ beaufschlagt. Bei dieser Ausführungsform bewirkt die auf die Messmembran 9 einwirkende Druckdifferenz zwischen dem ersten und dem zweiten Druck $p_1$, $p_2$ eine vom zu messenden Differenzdruck $\Delta p$ abhängige Auslenkung der Messmembran 9.

Zur Erfassung von Relativdrücken wird die erste Seite der Messmembran 9 mit dem zu messenden Druck p beaufschlagt, und der zweiten Seite der Messmembran 9 wird anstelle des zweiten Drucks $p_2$ ein Referenzdruck $p_{ref}$, z.B. ein Umgebungsdruck, zugeführt, bezogen auf den der auf die erste Seite einwirkende Druck p gemessen werden soll. Bei dieser Ausführungsform bewirkt die auf die Messmembran 9 einwirkenden Druckdifferenz zwischen dem Druck p und dem Referenzdruck $p_{ref}$ eine vom zu messenden Relativdruck abhängige Auslenkung der Messmembran 9.

Zur Erfassung von Absolutdrücken ist die unter der Messmembran 9 eingeschlossene Druckkammer 11 evakuiert, und durch die Messmembran 9 und den Membranträger 7 vollständig nach außen abgeschlossen. In dem Fall entfällt die durch den Träger 1, den Sockel 3 und den Membranträger 7 hindurch verlaufende, in der Druckkammer 11 mündende Druckübertragungsleitung 13, und der auf die erste Seite der Messmembran 9 einwirkende Druck p bewirkt eine vom zu messenden Absolutdruck abhängige Auslenkung der Messmembran 9.

Die resultierende Auslenkung der Messmembran 9 wird in allen drei Fällen z. B. über auf oder in der Messmembran 9 angeordnete Sensorelemente 15, z.B. zu einer Widerstandsmessbrücke zusammengeschaltete piezoresistive Elemente, erfasst und in ein elektrisches Ausgangssignal umgewandelt, das dann für eine weitere Verarbeitung und/oder Auswertung zur Verfügung steht.

Der Sockel 3 ist bei Differenzdruck- und Relativdruckmesseinrichtungen rohrförmig, und bei Absolutdruckmesseinrichtungen stabförmig, und weist eine Grundfläche auf, die kleiner als die Grundfläche des Drucksensors 5 ist. Über diese Geometrie wird bereits eine Entkopplung von Messmembran 9 und Träger 1 bewirkt, die den Drucksensor 5 vor thermomechanischen Spannungen schützt.

Halbleiter-Drucksensoren weisen regelmäßig eine, in der Regel quadratische Grundfläche, auf, deren Größe je nach Messbereich und Messempfindlichkeit in der Größenordnung von 1 mm² bis 100 mm² liegt. Demgegenüber weist der Sockel 3 vorzugsweise eine kreis-

oder kreisringförmige Grundfläche auf. Der Außendurchmesser des Sockels 3 liegt je nach Größer der Grundfläche des Drucksensors 5 vorzugsweise im Bereich von 0,5 mm bis 7 mm. Bei einem stabförmigen Sockel 3 entspricht das einer Grundfläche in der Größenordnung von ca. 0,2 mm² bis 40 mm². Bei Sockeln 3 mit kreisringförmiger Grundfläche ist die Fügefläche, über die Sockel 3 und Drucksensor 5 miteinander verbunden sind, noch geringer, wobei Sockel 3 mit kreisringförmiger Grundfläche vorzugsweise einen Innendurchmesser im Bereich von 0,25 mm bis 4 mm aufweisen. Der Sockel 3 weist vorzugsweise eine Gesamtlänge im Bereich von 0,5 mm bis 7,5 mm auf.

Erfindungsgemäß wird diese Entkopplung dadurch verstärkt, dass der Träger 1 eine dem Drucksensor 5 zugewandte Ausnehmung 17 aufweist, in die ein Ende des Sockels 3 mittels einer Klebung 19 eingesetzt ist. Zur Herstellung der Klebung 19 eignen sich insb. Kleber auf Epoxidharzbasis, thermoplastische Kleber oder Silikon-Kleber, wie zum Beispiel Silikon-Kautschuk.

Klebungen sind deutlich elastischer als starre Verbindungen, wie zum Beispiel Einglasungen, Bond-Verbindungen, Lötungen oder Schweißungen, und somit in der Lage aufgrund unterschiedlicher thermischer Ausdehnungskoeffizienten von Träger 1 und Sockel 3 entstehende Spannungen auszugleichen. Die Klebung 19 bewirkt somit eine Reduktion thermomechanischer Spannungen, die sich andernfalls auf den Drucksensor 5, insb. dessen Messmembran 9 auswirken bzw. übertragen würden. Dabei ist die durch die Klebung 19 bewirkte Reduktion thermomechanischer Spannungen umso größer, je elastischer die Klebung 19 ist.

Zur Erzielung einer möglichst großen Klebefläche erstreckt sich die Klebung 19 zwischen Sockel 3 und Träger 1 vorzugsweise über eine außenseitliche Mantelfläche des in der Ausnehmung 17 verlaufenden Endes des Sockels 3. Dabei steigt die zur Verfügung stehende Klebefläche linear mit zunehmender Länge L des in die Ausnehmung 17 eingesetzten Endes des Sockels 3, die wiederum der Tiefe der Ausnehmung 17 entspricht.

Die sich über die gesamte in der Ausnehmung 17 befindliche außenseitliche Mantelfläche des Sockels 3 erstreckende Klebung 19 bietet den Vorteil einer vergleichsweise großen Klebefläche, die es ermöglicht, auch mit einem sehr elastischen Kleber, wie zum Beispiel einem Silikon-Kautschuk eine vergleichsweise hohe Dichtheit und Festigkeit zu erzielen.

Darüber hinaus bietet diese Ausführungsform den Vorteil, dass die Klebung 19 im Wesentlichen nur sich über die gesamte Klebefläche verteilenden Scherbelastungen ausgesetzt ist, was im Vergleich zu druck- oder zugbelasteten Klebungen den Vorteil einer verringerten unter hohen Druckbelastungen ggfs. auftretenden Verformungshysterese führt.

Bei der in Fig. 1 dargestellten Ausführungsform weist der Sockel 3 vorzugsweise eine Gesamtlänge von größer gleich 3 mm auf, insb. eine Gesamtlänge von 3 mm bis 7,5 mm, und das in der Ausnehmung 17 verlaufende Ende des Sockels 3 weist vorzugsweise eine in Abhängigkeit vom Außendurchmesser des Sockels 3, des Druckmessbereichs, in dem die Druckmesseinrichtung eingesetzt werden soll, und des verwendeten Klebers vorgegebene Länge L von größer gleich 2,5 mm auf. Zur Erzielung einer möglichst großen Klebefläche wird der Sockel 3 vorzugsweise derart in die Ausnehmung 17 eingesetzt, dass das aus der Ausnehmung 17 herausragende den Drucksensor 5 tragende Ende des Sockels 3 eine deutlich geringere Länge aufweist, als das in der Ausnehmung 17 verlaufende Ende. Dabei genügt es, wenn das aus der Ausnehmung 17 herausragende Ende eine Mindestlänge von wenigen Zehntelmillimetern, insb. in der in der Größenordnung von 0,5 mm aufweist.

Vorzugsweise ist in der Ausnehmung 17 eine Zentriervorrichtung 19 zur Zentrierung des Sockels 3 in der Ausnehmung 17 vorgesehen, durch die ein Verkippen des Sockels 3 beim Einsetzen in die Ausnehmung 17 und während des nachfolgenden Klebevorgangs vermieden wird. Das ist insb. in Verbindung mit Sockeln 3 mit vergleichsweise großer Gesamtlänge, insb. einer Gesamtlänge von größer gleich 3 mm und/oder mit Klebungen 19 aus einem während der Ausführung des Klebevorgangs niederviskosen Kleber von Vorteil, da hier die Gefahr eines Verkippens des Sockels 3 besonders groß ist. Die Zentriervorrichtung 19 wird vorzugsweise dadurch gebildet, dass die Ausnehmung 17 eine sich in Richtung deren Bodenfläche, auf die der Sockel 3 aufgesetzt wird, auf die Grundfläche des Sockels 3 verjüngende Grundfläche aufweist. Diese Zentriervorrichtung 19 wird vorzugsweise unmittelbar bei der Herstellung der Ausnehmung 17 erzeugt, und bildet in dem Fall einen integralen Bestandteil des Trägers 1. Alternativ kann ein entsprechend geformter Einsatz in die Ausnehmung 17 des Trägers 1 eingesetzt werden.

Alternativ kann anstelle der in Fig. 1 dargestellten außenseitlichen Klebung 19 eine Klebung 23 vorgesehen werden, die sich über eine einer Bodenfläche der Ausnehmung 17 zugewandte Stirnfläche des in die Ausnehmung 17 eingesetzten Endes des Sockels 3 erstreckt. Ein Ausführungsbeispiel hierzu ist in Fig. 2 dargestellt.

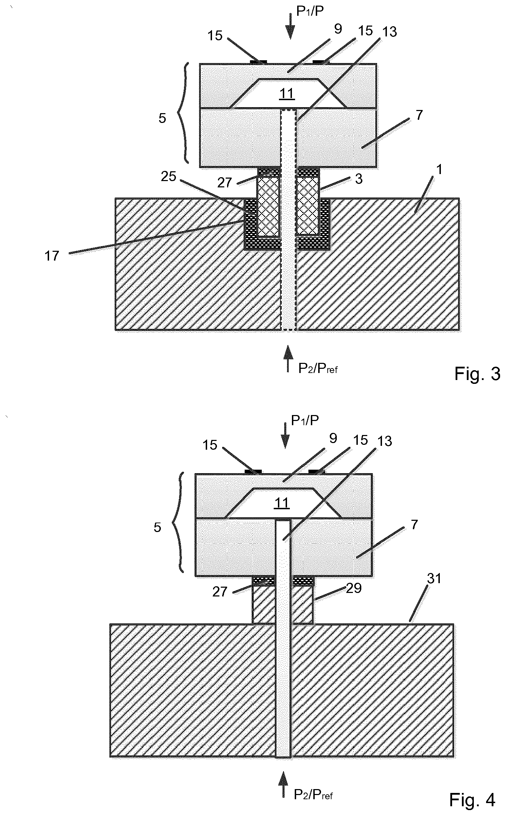

Eine weitere Alternative bildet die in Fig. 3 dargestellte Klebungen 25 zwischen Sockel 3 und Träger 1, die sich über die außenseitliche Mantelfläche des Sockels 3 und die der Bodenfläche des Trägers 1 zugewandte Stirnfläche des Sockels 3 erstreckt.

Die in Fig. 2 und 3 dargestellten Ausführungsformen eignen sich insb. für Druckmesseinrichtungen mit kürzeren Sockeln 3, insb. Sockeln 3 mit einer Gesamtlänge in der Größenordnung von 0,5 mm bis 3 mm und/oder für Druckmesseinrichtungen, bei denen, z.B. aus Platzgründen, keine für eine ausschließlich außenseitliche Klebung 19 ausreichend große Tiefe der Ausnehmung 17 vorgesehen werden kann.

Beide Ausführungsformen unterscheiden sich von dem in Fig. 1 dargestellten Ausführungsbeispiel durch die geringere Tiefe der Ausnehmung 17 und den Bereich, über den sich die jeweilige Klebung 23 bzw. 25 erstreckt. Im Übrigen wird auf die Beschreibung zu Fig. 1 verwiesen wird. Auch bei diesen Ausführungsformen kann, insb. in Verbindung mit Sockeln 3 mit größerer Gesamtlänge eine in Fig. 2 und 3 nicht dargestellte, Zentriervorrichtung zur Zentrierung des Sockels 3 vorgesehen werden.

Bei allen beschriebenen Klebungen 19, 23, 25 hängt die Festigkeit und die Dichtheit der über die Klebung 19, 23, 25 bewirkten Fügung zum einen von der Wahl des Klebers und zum anderen von der zur Verbindung von Sockel 3 und Träger 1 zur Verfügung stehenden Klebefläche ab. Entsprechend wird der zur Herstellung der Klebung 19 verwendete Kleber vorzugsweise in Abhängigkeit von der zur Verfügung stehenden Klebefläche und den vom Druckmessbereich, in dem die Druckmesseinrichtung eingesetzt werden soll, abhängigen Anforderungen an die Festigkeit ausgewählt, wobei ein umso elastischerer Kleber eingesetzt wird, je größer die zur Verfügung stehende Klebefläche ist und je geringer die Anforderungen an die Festigkeit sind.

Dabei ist zu beachten, dass die Festigkeit von Klebern in der Regel von der Temperatur und unter Umständen von der Art der Belastung der Klebung 19, 23, 25 abhängt. Während die den Sockel 3 außenseitlich umgebenden Klebung 19 im Wesentlichen Scherkräften ausgesetzt ist, ist die stirnseitige Klebung 23 im Wesentlichen Druckbelastungen, und bei Differenz- und Relativdruckmessungen auch Zugbelastungen ausgesetzt. In beiden Fällen erfordern jedoch vom Träger 1 in Richtung des Drucksensors 5 gerichtete Belastungen der Klebung 19, 23, 25 eine höhere Festigkeit des Klebers, als in umgekehrter Richtung vom Drucksensor 5 in Richtung des Trägers 1 wirkende Belastungen, da letztere nicht nur vom Kleber sondern auch vom Träger 1 abgefangen werden.

Dabei bildet das Elastizitätsmodul des verwendeten Klebers unter der jeweiligen Belastungsrichtung ein Maß für die Festigkeit. So kann es zum Beispiel in Abhängigkeit von den Abmessungen der Komponenten, der Materialwahl und der Größe der Klebefläche in Verbindung mit erfindungsgemäßen Differenzdruckmesseinrichtung oder erfindungsgemäßen Absolut- oder Relativdruckmesseinrichtungen zur Messung von höheren Drücken, insb. Drücken von größer gleich 40 bar, vorteilhaft sein einen Kleber mit einem Elastizitätsmodul von größer gleich 2000 MPa, insb. einem Elastizitätsmodul im Bereich von 2000 MPa bis 10000 MPa, einzusetzen. Demgegenüber kann es zum Beispiel in Abhängigkeit von den Abmessungen der Komponenten, der Materialwahl und der Größe der Klebefläche in Verbindung mit erfindungsgemäßen Absolut- oder Relativdruckmesseinrichtungen zur Messung von kleineren Drücke, insb. von Drücken kleiner gleich 40 bar, je nach Größe der Klebefläche vorteilhaft sein einen Kleber mit einem Elastizitätsmodul von kleiner gleich 2000 MPa, insb. einen Elastizitätsmodul im Bereich von 10 MPa bis 1.000 MPa, einzusetzen, wobei in Verbindung mit Absolut- oder Relativdruckmesseinrichtungen zur Messung von kleineren Drücken, insb. von Drücken kleiner gleich 40 bar, je nach Größe der Klebefläche sogar Kleber mit einem Elastizitätsmodul von kleiner gleich 10 MPa vorteilhaft sein können.

Alle beschriebenen Klebungen 19, 23, 25 bieten den Vorteil, dass durch sie nicht nur thermomechanische Spannungen abgebaut werden, sondern darüber hinaus eine große Bandbreite unterschiedlicher Werkstoffe von Sockel 3 und Träger 1 miteinander verbunden werden können.

Dabei wird für den Träger 1 im Hinblick auf dessen Druckfestigkeit vorzugsweise ein Werkstoff mit hohem Elastizitätsmodul, und im Hinblick auf dessen vergleichsweise großes Volumen vorzugsweise kostengünstiger Werkstoff, wie zum Beispiel Edelstahl, eingesetzt.

Der Werkstoff des Sockels 3 kann dann im Hinblick auf die speziellen Anforderungen an die Druckmesseinrichtung aus einer Vielzahl unterschiedlicher Werkstoffe ausgewählt werden. Hierzu zählen Metalle, insb. Edelstahl, Kovar oder Invar, Keramiken, insb. Aluminiumoxid ($Al_2O_3$), Siliziumcarbid (SiC), Siliziumnitrid ($Si_3N_4$) oder Aluminiumnitrid (AlN), und Gläser, insb. Borosilikatglas.

Dabei werden für die Messung von Differenzdrücken oder hohen Absolut- oder Relativdrücken, wie z.B. Drücken von größer gleich 40 bar, vorzugsweise Sockel 3 aus einem Werkstoff mit hohem Elastizitätsmodul, insb. einem Elastizitätsmodul von größer gleich 200000 MPa eingesetzt. Durch den vergleichsweise hohen Elastizitätsmodul werden vom auf den Sockel 3 einwirkenden Druck abhängige Einflüsse auf die erzielbare Messgenauigkeit weitgehend vermieden. Hierzu eignen sich insb. Sockel 3 aus Edelstahl, Kovar, Invar oder aus Keramik, z.B. aus Aluminiumoxid ($Al_2O_3$), Siliziumcarbid (SiC), Siliziumnitrid($Si_3N_4$) oder Aluminiumnitrid (AlN). Zur Messung von niedrigeren Absolut- oder Relativdrücken, wie z.B. Drücken im Bereich von bis zu 40 bar, können auch Werkstoffe mit geringerem Elastizitätsmodul, wie zum Beispiel Glas, eingesetzt werden.

Darüber hinaus kann über die Wahl eines Isolators als Werkstoff für den Sockel 3 eine elektrische Isolation des Drucksensors 5 gegenüber dem Träger 1 bewirkt werden. Eine elektrische Isolation kann zum Beispiel durch einen Sockel 3 aus Glas, z.B. aus Borosilikatglas, oder Keramik, z.B. aus Aluminiumoxid ($Al_2O_3$), Siliziumnitrid($Si_3N_4$) oder Aluminiumnitrid (AlN), bewirkt werden, wobei für die Messung von Differenzdrücken oder hohen Absolut- oder Relativdrücken, wie z.B. Drücken größer gleich 40 bar, vorzugsweise Keramik eingesetzt wird, da Keramik einen deutlich höheren Elastizitätsmodul aufweist als Gläser.

Bei Druckmesseinrichtungen, deren Drucksensor ohnehin eine mit dem Sockel 3 zu verbindende Grundplatte oder einen Membranträger aus einem Isolator, z.B. aus Glas oder Keramik aufweisen, wird eine solche Isolation nicht benötigt.

Das dem ersten Ende des Sockels 3 gegenüberliegende zweite Ende des Sockels 3 trägt den Drucksensor 5 und ist mit diesem über eine Fügung 27 verbunden. Die Fügung 27 ist vorzugsweise ebenfalls eine Klebung, was die oben beschriebenen Vorteile einer weiteren Reduktion thermomechanischer Spannungen und einer großen Flexibilität hinsichtlich der als Werkstoff für den Sockel 3 verwendbaren Materialien mit sich bringt. Auch diese Klebung kann z.B. mit einem Kleber auf Epoxidharzbasis, einem thermoplastischen Kleber oder einem Silikon-Kleber, insb. einem Silikon-Kautschuk, ausgeführt werden.

Klebungen 19, 23 bzw. 25 und 27 an beiden Enden des Sockels 3 bieten den Vorteil, dass durch deren Zusammenwirken auch dann noch eine deutliche Reduktion thermomechanischer Spannungen bewirkt wird, wenn beide Klebungen 19, 23 bzw. 25 und 27 aus einem Kleber mit einem vergleichsweise hohen Elastizitätsmodul ausgeführt werden.

Alternativ können Drucksensor 5 und Sockel 3 über ein anderes Fügeverfahren, z.B. eine Lötung, verbunden sein.

Zur weiteren Reduktion von sich auf den Drucksensor 5, insb. dessen Messmembran 9 auswirkenden temperaturabhängigen Spannungen besteht der Sockel 3 vorzugsweise aus einem Werkstoff, der einen an den thermischen Ausdehnungskoeffizienten des Drucksensors 5 angepassten thermischen Ausdehnungskoeffizienten aufweist. Bezogen auf den thermischen Ausdehnungskoeffizienten von Silizium von 2,6 ppm/K eignen sich hierzu insb. Borosilikatgläser, die einen thermischen Ausdehnungskoeffizient in der Größenordnung von 3,2 ppm/K aufweisen. In Druckmesseinrichtungen zur Messung von Differenzdrücken oder höheren Absolut- oder Relativdrücken wird jedoch vorzugsweise ein Werkstoff mit höherem Elastizitätsmodul, wie zum Beispiel Kovar mit einem thermischen Ausdehnungskoeffizienten in der Größenordnung von 5 ppm/K, Invar mit einem thermischen Ausdehnungskoeffizienten in der Größenordnung von 0,55 ppm/K oder Keramik, z.B. Aluminiumoxid ($Al_2O_3$) mit einen thermischen Ausdehnungskoeffizienten in der Größenordnung von 8,5 ppm/K, Siliziumcarbid (SiC) mit einem thermischen Ausdehnungskoeffizienten in der Größenordnung von 3,5 ppm/K bis 4,5 ppm/K, Aluminiumnitrid (AlN) mit einem thermischen Ausdehnungskoeffizienten in der Größenordnung von 4 ppm/K bis 5 ppm/K oder Siliziumnitrid($Si_3N_4$) mit einem thermischen Ausdehnungskoeffizienten in der Größenordnung von 2,8 ppm/K bis 2,9 ppm/K, ausgewählt.

Um den Einfluss der unterschiedlichen Werkstoffe des Sockels 3 auf den temperaturabhängigen Messfehler einer erfindungsgemäßen Druckmesseinrichtung zu veranschaulichen, wurden temperaturabhängige Hysteresen von mit der in Fig. 1 dargestellten Druckmesseinrichtung bei unbelasteter Messmembran 9 ausgeführt Differenzdruckmessungen gemessen. Die Messungen erfolgten jeweils, indem beide Seiten der Messmembran 9 dem gleichen Druck $p=p_1=p_2$ ausge-

setzt wurden, und die Hysteresen H als auf den Differenzdruckmessbereich von 500 mbar bezogene Differenz zwischen einem bei einer Umgebungstemperatur von 25 °C gemessen Differenzdruck $\Delta p(25°C)$ und einem bei einer Umgebungstemperatur von 135 °C gemessen Differenzdruck $\Delta p(135°C)$, gemäß

$$H = \left| \frac{\Delta p(25°C) - \Delta p(135°C)}{500 mbar} \right|$$

bestimmt wurden. Bei allen Messungen wurden baugleiche mit einem Epoxidharz-Kleber, der bei 25 °C einen Elastizitätsmodul von 4500 MPa aufweist, in die Ausnehmung 17 eingeklebte Sockel 3 mit einer Gesamtlänge von 5 mm, einer in der Ausnehmung 17 verlaufenden, über deren äußere Mantelfläche eingeklebten Länge L von 4,5 mm, und einen Außendurchmesser von 2 mm eingesetzt. Die Messungen ergaben für einen Sockel 3 aus Edelstahl eine Hysterese H von 0,025 %, und für Sockel 3 aus Aluminiumoxid, Kovar und Borosilikatglas jeweils Hysteresen H von weniger als 0,005 %.

Im Vergleich dazu wurde mit der in Fig. 4 dargestellte Druckmesseinrichtung, mit einem identisch ausgebildeten Drucksensor 5, der mittels einer identisch zu der Fügung 27 ausgebildeten Fügung auf einen 0,5 mm hohen Edelstahl-Sockel 29 eines Edelstahl-Trägers 31 angeordnet ist, unter den gleichen Messbedingungen eine temperaturabhängige Hysterese H von 0,125 % gemessen.

| 1  | Träger |
|----|--------|
| 3  | Sockel |
| 5  | Drucksensor |
| 7  | Membranträger |
| 9  | Messmembran |
| 11 | Druckkammer |
| 13 | Druckübertragungsleitung |
| 15 | Sensorelemente |
| 17 | Ausnehmung |
| 19 | Klebung |
| 21 | Zentriervorrichtung |
| 23 | Klebung |
| 25 | Klebung |
| 27 | Fügung |
| 29 | Edelstahl-Sockel |
| 31 | Edelstahl-Träger |

**Patentansprüche**

1. Druckmesseinrichtung, mit

   - einem Träger (1), insb. einem Träger (1) aus einem Metall, insb. aus einem Edelstahl,
   - einem mit dem Träger (1) verbundenen Sockel (3), und

   - einem auf dem Sockel (3) montierten Drucksensor (5), dessen Grundfläche größer als eine Grundfläche des Sockels (5) ist, wobei
   - ein vom Drucksensor (5) abgewandtes Ende des Sockel (3) mittels einer Klebung (19, 23, 25) in eine Ausnehmung (17) im Träger (1) eingeklebt ist,
   - die Druckmesseinrichtung eine Differenzdruckmesseinrichtung oder eine Absolut- oder Relativdruckmesseinrichtung zur Messung von höheren Drücken ist, bei der der Sockel (3) aus Keramik, insb. aus Aluminiumoxid ($Al_2O_3$), Siliziumnitrid ($Si_3N_4$), Siliziumcarbid (SiC) oder Aluminiumnitrid (AIN), besteht, die einen Elastizitätsmodul von größer gleich 200000 MPa aufweist, und
   - in der Ausnehmung (17) eine Zentriervorrichtung (21), insb. eine durch eine sich in Richtung einer Bodenfläche der Ausnehmung (17), auf die der Sockel (3) aufgesetzt wird, auf die Grundfläche des Sockels (3) verjüngende Grundfläche der Ausnehmung (17) gebildete Zentriervorrichtung (21), zur Zentrierung des Sockels (3) vorgesehen ist.

2. Druckmesseinrichtung nach Anspruch 1, **dadurch gekennzeichnet, dass** der Drucksensor (5) mittels einer Fügung (27), insb. einer Klebung, insb. einer mit einem Kleber auf Epoxidharzbasis, einem thermoplastischen Kleber oder einem Silikon-Kleber, insb. einem Silikon-Kautschuk. ausgeführten Klebung, auf einem aus der Ausnehmung (17) herausragenden Ende des Sockels (3), insb. einem herausragenden Ende mit einer Länge in der Größenordnung von wenigen Zehntelmillimetern, montiert ist.

3. Druckmesseinrichtung gemäß Anspruch 1, **dadurch gekennzeichnet, dass** sich die Klebung (19, 25) zwischen Träger (1) und Sockel (3) über eine außenseitliche Mantelfläche des in der Ausnehmung (17) verlaufenden Endes des Sockels (3) erstreckt.

4. Druckmesseinrichtung gemäß Anspruch 3, **dadurch gekennzeichnet, dass**

   - der Sockel (3) eine Gesamtlänge von größer gleich 3 mm aufweist, insb. eine Gesamtlänge von 3 mm bis 7,5 mm, und
   - das in der Ausnehmung (17) verlaufende Ende des Sockels (3) eine Länge (L) von größer gleich 2,5 mm aufweist, wobei
   - das aus der Ausnehmung (17) herausragende den Drucksensor (5) tragende Ende des Sockels (3) insb. eine Länge von wenigen Zehntelmillimetern, insb. in der Größenordnung von 0,5 mm, aufweist.

5. Druckmesseinrichtung gemäß Anspruch 1, **da-**

**durch gekennzeichnet, dass** sich die Klebung (23, 25) zwischen Träger (1) und Sockel (3) über eine einer Bodenfläche der Ausnehmung (17) zugewandte Stirnfläche des Sockels (3) erstreckt.

6. Druckmesseinrichtung gemäß Anspruch 1, **dadurch gekennzeichnet, dass** sich die Klebung (25) zwischen Träger (1) und Sockel (3) über eine außenseitliche Mantelfläche des in der Ausnehmung (17) verlaufenden Endes des Sockels (3) und eine einer Bodenfläche der Ausnehmung (17) zugewandte Stirnfläche des Sockels (3) erstreckt.

7. Druckmesseinrichtung gemäß Anspruch 5 oder 6, **dadurch gekennzeichnet, dass** der Sockel (3) eine Gesamtlänge kleiner gleich 3 mm, insb. eine Gesamtlänge in der Größenordnung von 0,5 mm bis 3 mm aufweist.

8. Druckmesseinrichtung gemäß Anspruch 1, **dadurch gekennzeichnet, dass** die Klebung (19, 23, 25) zwischen Sockel (3) und Träger (1) eine mit einem Kleber auf Epoxidharzbasis, einem thermoplastischen Kleber oder einem Silikon-Kleber, insb. einem Silikon-Kautschuk ausgeführte Klebung (19, 23, 25) ist.

9. Druckmesseinrichtung nach Anspruch 1, **dadurch gekennzeichnet, dass** die Klebung (19, 23, 25) zwischen Sockel (3) und Träger (1) eine mit einem in Abhängigkeit von einer zur Verbindung von Sockel (3) und Träger (1) zur Verfügung stehenden Klebefläche ausgewählter Kleber ist, wobei ein umso elastischerer Kleber eingesetzt wird, je größer die zur Verfügung stehende Klebefläche ist.

10. Druckmesseinrichtung nach Anspruch 1, **dadurch gekennzeichnet, dass** der Sockel (3) aus einem Werkstoff besteht, der einen an den thermischen Ausdehnungskoeffizienten des Drucksensors (5) angepassten thermischen Ausdehnungskoeffizienten aufweist.

11. Druckmesseinrichtung nach Anspruch 1, **dadurch gekennzeichnet, dass** der Sockel (3) eine Länge im Bereich von 0,5 mm bis 7,5 mm aufweist, einen Außendurchmesser im Bereich von 0,5 mm bis 7 mm aufweist, und stabförmig ist oder einen Innendurchmesser im Bereich von 0,25 mm bis 4 mm aufweist.

12. Druckmesseinrichtung nach Anspruch 1, **dadurch gekennzeichnet, dass** der Träger (1) aus einem Metall, insb. aus einem Edelstahl, besteht.

**Claims**

1. Pressure measuring device, with

    - a carrier (1), particularly a carrier (1) made of a metal, particularly stainless steel,
    - a base (3) connected to the carrier (1), and
    - a pressure sensor (5) mounted on the base (3), wherein the basic surface of said sensor is greater than a basic surface of the base (3),
    - wherein an end of the base (3) facing away from the pressure sensor (5) is stuck into a recess (17) in the carrier (1) by means of a bonded joint (19, 23, 25),
    - wherein the pressure measuring device is a differential pressure measuring device or an absolute or relative pressure measuring device designed to measure higher pressures, wherein the base (3) is made from ceramic, particularly aluminum oxide ($Al_2O_3$), silicon nitride ($Si_3N_4$), silicon carbide (SiC) or aluminum nitride (AiN), which has an elasticity module greater than or equal to 200,000 MPa, and
    - wherein a centering device (21) is provided in the recess (17) to center the base (3), particularly a centering device (21) which is formed by a basic surface of the recess (17) which tapers in the direction of a floor area of the recess (17) on which the base (3) is located.

2. Pressure measuring device as claimed in Claim 1, **characterized in that** the pressure sensor (5) is mounted by means of a joint (27), particularly a bonded joint, particularly a bonded joint implemented using an adhesive on an epoxy resin base, a thermoplastic adhesive or a silicone adhesive, particularly a silicone rubber, on an end of the base (3) projecting out of the recess (17), particularly an end projecting out with a length in the region of a few tenths of a millimeter.

3. Pressure measuring device as claimed in Claim 1, **characterized in that** the bonded joint (19, 25) between the carrier (1) and the base (3) extends over an exterior lateral surface of the end of the base (3) extending in the recess (17).

4. Pressure measuring device as claimed in Claim 3, **characterized in that**

    - the base (3) has a total length greater than or equal to 3 mm, particularly a total length of 3 mm to 7.5 mm, and
    - the end of the base (3) extending in the recess (17) has a length (L) greater than or equal to 2.5 mm, wherein
    - the end of the base (3), which carries the pressure sensor (5) and projects out of the recess (17) particularly has a length of a few tenths of a millimeter, particularly in the region of 0.5 mm.

5. Pressure measuring device as claimed in Claim 1, **characterized in that** the bonded joint (23, 25) between the carrier (1) and the base (3) extends over a front face of the base (3) facing towards a floor area of the recess (17).

6. Pressure measuring device as claimed in Claim 1, **characterized in that** the bonded joint (25) between the carrier (1) and the base (3) extends over an exterior lateral surface of the end of the base (3) extending in the recess (17) and a front face of the base (3) facing towards a floor area of the recess (17).

7. Pressure measuring device as claimed in Claim 5 or 6, **characterized in that** the base (3) has a total length less than or equal to 3 mm, particularly a total length in the region of 0.5 mm to 3 mm.

8. Pressure measuring device as claimed in Claim 1, **characterized in that** the bonded joint (19, 23, 25) between the base (3) and the carrier (1) is a bonded joint (19, 23, 25) implemented using an adhesive on an epoxy resin base, a thermoplastic adhesive or a silicone adhesive, particularly a silicone rubber.

9. Pressure measuring device as claimed in Claim 1, **characterized in that** the bonded joint (19, 23, 25) between the base (3) and the carrier (1) is an adhesive selected depending on an adhesive surface available to connect the base (3) and the carrier (1), wherein the greater the adhesive surface available, the more elastic the adhesive used is.

10. Pressure measuring device as claimed in Claim 1, **characterized in that** the base (3) is made from a material which has a thermal expansion coefficient which is adapted to the thermal expansion coefficient of the pressure sensor (5).

11. Pressure measuring device as claimed in Claim 1, **characterized in that** the base (3) has a length in the range from 0.5 mm to 7.5 mm, an outer diameter in the range from 0.5 mm to 7 mm, and is rod-shaped or has an internal diameter in the range from 0.25 mm to 4 mm.

12. Pressure measuring device as claimed in Claim 1, **characterized in that** the carrier (1) is made from a metal, particularly stainless steel.

**Revendications**

1. Dispositif de mesure de pression, avec

- un support (1), notamment un support (1) constitué de métal, notamment d'acier inoxydable,
- un socle (3) relié avec le support (1), et
- un capteur de pression (5) monté sur le socle (3), capteur dont la surface de base est supérieure à une surface de base du socle (3),
- dispositif pour lequel une extrémité du socle (3) située à l'opposé du capteur de pression (5) est collée au moyen d'une liaison adhésive (19, 23, 25) dans un évidement (17) du support (1),
- lequel dispositif de mesure de pression comprend un dispositif de mesure de pression différentielle ou un dispositif de mesure de pression absolue ou relative, destiné à la mesure de pression élevées, dispositif pour lequel le socle (3) est en céramique, notamment en oxyde d'aluminium ($Al_2O_3$), en nitrure de silicium ($Si_3N_4$), en carbure de silicium ($SiC$) ou en nitrure d'aluminium ($AiN$), et lequel dispositif présente un module d'élasticité supérieur ou égal à 200 000 MPa, et
- dispositif pour lequel est prévu, dans l'évidement (17), un dispositif de centrage (21), notamment un dispositif de centrage (21) destiné au centrage du socle (3) et qui formé par une surface de base de l'évidement (17) se rétrécissant en direction d'une surface inférieure de l'évidement (17), sur laquelle le socle (3) est placé.

2. Dispositif de mesure de pression selon la revendication 1, **caractérisé en ce que** le capteur de pression (5) est monté au moyen d'un assemblage (27), notamment une liaison adhésive, notamment une liaison adhésive réalisée avec une colle à base de résine époxy, une colle thermoplastique ou une colle silicone, notamment un caoutchouc silicone, sur une extrémité du socle (3) faisant saillie de l'évidement (17), notamment une extrémité saillante d'une longueur de l'ordre de quelques dixièmes de millimètre.

3. Dispositif de mesure de pression selon la revendication 1, **caractérisé en ce que** la liaison adhésive (19, 25) entre le support (1) et la base (3) s'étend sur une surface latérale extérieure de l'extrémité du socle (3) s'étendant dans l'évidement (17).

4. Dispositif de mesure de pression selon la revendication 3, **caractérisé**

- **en ce que** le socle (3) présente une longueur totale supérieure ou égale à 3 mm, notamment une longueur totale de 3 mm à 7,5 mm, et
- **en ce que** l'extrémité du socle (3) s'étendant dans l'évidement (17) présente une longueur (L) supérieure ou égale à 2,5 mm,
- l'extrémité du socle (3) - qui porte le capteur de pression (5) et qui dépasse de l'évidement (17) - présentant notamment une longueur de quelques dixièmes de millimètre, notamment de l'ordre de 0,5 mm.

5. Dispositif de mesure de pression selon la revendication 1, **caractérisé en ce que** la liaison adhésive (23, 25) entre le support (1) et le socle (3) s'étend sur une face frontale du socle (3) tournée vers une surface inférieure de l'évidement (17).

6. Dispositif de mesure de pression selon la revendication 1, **caractérisé en ce que** la liaison adhésive (25) entre le support (1) et le socle (3) s'étend sur une surface latérale extérieure de l'extrémité du socle (3) s'étendant dans l'évidement (17) et une face d'extrémité du socle (3) faisant face à une surface inférieure de l'évidement (17).

7. Dispositif de mesure de pression selon la revendication 5 ou 6, **caractérisé en ce que** le socle (3) présente une longueur totale inférieure ou égale à 3 mm, notamment une longueur totale de l'ordre de 0,5 mm à 3 mm.

8. Dispositif de mesure de pression selon la revendication 1, **caractérisé en ce que** la liaison adhésive (19, 23, 25) entre le socle (3) et le support (1) est une liaison adhésive (19, 23, 25) réalisée avec une colle à base de résine époxy, une colle thermoplastique ou une colle silicone, notamment un caoutchouc silicone.

9. Dispositif de mesure de pression selon la revendication 1, **caractérisé en ce que** la liaison adhésive (19, 23, 25) entre le socle (3) et le support (1) est une colle choisie avec une surface adhésive disponible pour relier le socle (3) et le support (1) - plus la surface adhésive disponible étant grande, plus la colle utilisée étant élastique.

10. Dispositif de mesure de pression selon la revendication 1, **caractérisé en ce que** le socle (3) est constitué d'un matériau qui présente un coefficient de dilatation thermique adapté au coefficient de dilatation thermique du capteur de pression (5).

11. Dispositif de mesure de pression selon la revendication 1, **caractérisé en ce que** le socle (3) présente une longueur comprise entre 0,5 mm et 7,5 mm, un diamètre extérieur compris entre 0,5 mm et 7 mm, et est en forme de tige ou présente un diamètre intérieur compris entre 0,25 mm et 4 mm.

12. Dispositif de mesure de pression selon la revendication 1, **caractérisé en ce que** le support (1) est constitué de métal, notamment d'acier inoxydable.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007052364 A1
- DE 3436440 A1
- WO 9405988 A1
- US 5049421 A
- DE 102009046692 A1